# EUROPEAN PATENT APPLICATION

(11) **EP 4 629 327 A1**
(43) Date of publication of application: **08.10.2025**
(21) Application number: 23946368.0
(22) Date of filing: 20.09.2023
(51) Int. Cl.: H01M 4/36, H01M 4/587, H01M 4/38

(54) **NEGATIVE ELECTRODE ACTIVE MATERIAL AND PREPARATION METHOD THEREFOR, NEGATIVE ELECTRODE SHEET, SECONDARY BATTERY, AND DEVICE**

(30) Priority: 24.07.2023 CN 202310909413
(71) Applicant: Contemporary Amperex Technology Co., Limited, Ningde, Fujian 352100 (CN)
(72) Inventor: WU, Kai, Ningde, Fujian 352100 (CN); DENG, Yaqian, Ningde, Fujian 352100 (CN); SHI, Dongyang, Ningde, Fujian 352100 (CN); LV, Ruijing, Ningde, Fujian 352100 (CN); LIU, Zhi, Ningde, Fujian 352100 (CN); CHENG, Zhipeng, Ningde, Fujian 352100 (CN); WANG, Yuzhen, Ningde, Fujian 352100 (CN)
(74) Representative: Herrmann, Uwe
(86) International application number: PCT/CN2023/120088
(87) International publication number: WO 2025/020287

(57) **Abstract**

The present application relates to a negative electrode active material and a preparation method therefor, a negative electrode sheet, a secondary battery, and an electric device. The negative electrode active material comprises expanded graphite, a porous carbon layer, and silicon particles; the expanded graphite comprises a plurality of graphite layers; the porous carbon layer is at least distributed on an interlayer surface of one graphite layer, and the silicon particles are at least distributed in pore channels of porous carbon of the porous carbon layer.

## Description

The present application claims priority to Chinese Patent Application No. 2023109094130 filed with the China National Intellectual Property Administration on 24 July 2023 and titled "NEGATIVE ELECTRODE ACTIVE MATERIAL, PREPARATION METHOD THEREFOR, NEGATIVE ELECTRODE PLATE, SECONDARY BATTERY, AND APPARATUS," the entire content of which is incorporated in the present application by reference.

### TECHNICAL FIELD

The present application relates to the technical field of batteries, and specifically relates to a negative electrode active material, a preparation method therefor, a negative electrode plate, a secondary battery, and an electrical apparatus.

### BACKGROUND

The description here merely provides background information related to the present application, and does not necessarily constitute the prior art.

Secondary batteries are widely used in various consumer electronic products and electric vehicles due to outstanding features such as light weight, no pollution, and memoryless effect. With the growing market demand for high-capacity power batteries, negative electrode materials with high theoretical specific capacity, such as a silicon-based material, have been developed.

However, the silicon-based material has the high theoretical specific capacity, but severely expands during charging, and has low first discharge efficiency. Therefore, in order to obtain a negative electrode material with more balanced performance, it is often necessary to compound the silicon-based material with a carbon-based material to jointly serve as a negative electrode active material. However, at present, cycle stability of the silicon-carbon composite negative electrode active material remains at a low level.

### SUMMARY OF THE INVENTION

On this basis, it is necessary to provide a negative electrode active material, a preparation method therefor, a negative electrode plate, a secondary battery, and an apparatus.

A first aspect of the present application provides a negative electrode active material, comprising expanded graphite, a porous carbon layer, and silicon particles, wherein the expanded graphite comprises a plurality of graphite layers, the porous carbon layer is at least distributed on an interlayer surface of one of the graphite layers, and the silicon particles are at least distributed in pore channels of porous carbon of the porous carbon layer.

A second aspect of the present application provides a method for preparing any one of the above negative electrode active materials, comprising steps below:
mixing the expanded graphite with a carbon source solution, subjecting the mixture to a hydrothermal reaction, and then calcining solid product of the hydrothermal reaction to obtain an intermediate product; wherein the intermediate product comprises the expanded graphite and the porous carbon layer distributed on the surface of the graphite layer in the expanded graphite; and
forming the silicon particles in the pore channels of the porous carbon of the intermediate product.

A third aspect of the present application provides a negative electrode plate, comprising any one of the above negative electrode active materials.

A fourth aspect of the present application provides a secondary battery, comprising the above negative electrode plate.

A fifth aspect of the present application provides an electrical apparatus, comprising the above secondary battery.

Details of one or more embodiments of the present application are presented in the drawings and description below. Other features, objectives, and advantages of the present application will become apparent from the specification, drawings, and claims.

### DESCRIPTION OF DRAWINGS

In order to provide a clearer explanation of the technical solution of the present application, a brief introduction will be given to the accompanying drawings used in the present application. Apparently, the drawings described below are merely some embodiments of the present application. For those of ordinary skills in the art, other drawings may be further obtained based on these drawings without creative work.
FIG. 1 is a schematic structural diagram of a negative electrode active material in an embodiment of the present application;
FIG. 2 is a schematic structural diagram of a negative electrode active material in another embodiment of the present application;
FIG. 3 is a schematic diagram of a battery cell in an embodiment of the present application;
FIG. 4 is an exploded view of the battery cell in an embodiment of the present application shown in FIG. 3;
FIG. 5 is a schematic diagram of a battery module in an embodiment of the present application;
FIG. 6 is a schematic diagram of a battery pack in an embodiment of the present application;
FIG. 7 is an exploded view of the battery pack in an embodiment of the present application shown in FIG. 6; and
FIG. 8 is a schematic diagram of an electrical apparatus in which a secondary battery is used as a power source in an embodiment of the present application.

Reference numerals in the figures:
1. Battery cell; 11. Case; 12. Electrode assembly; 13. Cover plate; 2. Battery pack; 21. Upper box; 22. Lower box; 3. Battery module; 4. Electrical apparatus; 5. Negative electrode active material; 511. Graphite layer; 52. Porous carbon layer; 53. Coating layer.

### DETAILED DESCRIPTION

Embodiments of the present application are specifically disclosed below with reference to the detailed description of drawings as appropriate. However, there may be cases where unnecessary detailed descriptions are omitted. For example, there are cases where detailed descriptions of well-known items and repeated descriptions of actually identical structures are omitted. This is to avoid unnecessary redundancy in the following descriptions and to facilitate understanding by those skilled in the art. In addition, the drawings and subsequent descriptions are provided for those skilled in the art to fully understand the present application, and are not intended to limit the subject matter recited in the claims.

The "range" disclosed in the present application is defined in the form of a lower limit and an upper limit, a given range is defined by selection of a lower limit and an upper limit, and the selected lower limit and upper limit define boundaries of the particular range. A range defined in this manner may be inclusive or exclusive of end values, and may be arbitrarily combined, that is, any lower limit may be combined with any upper limit to form a range. For example, if the ranges of 60-120 and 80-110 are enumerated for a particular parameter, it is understood that the ranges of 60-110 and 80-120 are also contemplatable. Additionally, if the minimum range values 1 and 2 are enumerated, and if the maximum range values 3, 4 and 5 are enumerated, the following ranges are all contemplatable: 1-3, 1-4, 1-5, 2- 3, 2-4, and 2-5. In the present application, unless stated otherwise, the numerical range "a-b" represents an abbreviated representation of any combination of real numbers between a to b, where both a and b are real numbers. For example, the numerical range "0-5" means that all the real numbers between "0-5" have been enumerated herein, and "0-5" is just an abbreviated representation of combinations of these numerical values. In addition, when a parameter is expressed as an integer greater than or equal to 2, it is equivalent to disclosing that the parameter is, for example, an integer of 2, 3, 4, 5, 6, 7, 8, 9, 10, 11, 12, and the like.

Unless otherwise particularly stated, all embodiments and optional embodiments of the present application may be combined with each other to form new technical solutions.

Unless otherwise particularly stated, all steps in the present application may be performed sequentially or may be performed randomly, and are preferably performed sequentially. For example, the method comprises steps (a) and (b), meaning that the method may comprise steps (a) and (b) performed sequentially, or may comprise steps (b) and (a) performed sequentially. For example, the reference to the method may further comprise step (c), which means that step (c) may be added to the method in any sequence, for example, the method may comprise steps (a), (b) and (c), or may comprise steps (a), (c) and (b), or may comprise steps (c), (a) and (b), and so on.

In the present application, in open-ended technical features or technical solutions described with the wordings such as "contain," "include," or "comprise," unless otherwise stated, additional members other than the enumerated members are not excluded, which may be regarded as providing both close-ended features or solutions consisting of the enumerated members and open-ended features or solutions including additional members in addition to the enumerated members. For example, A comprises a1, a2, and a3, and unless otherwise stated, may further comprise other members or may not comprise additional members, which may be regarded as providing both the feature or solution that "A consists of a1, a2, and a3" and the feature or solution that "A not only comprises a1, a2, and a3, but also comprises other members."

Unless otherwise stated, the terms used in the present application have the well-known meanings as commonly understood by those skilled in the art. Unless otherwise specified, numerical values of parameters mentioned in the present application may be measured using common measurement methods in the art (e.g., the test may be performed based on methods provided in the embodiments of the present application).

### Secondary battery

The secondary battery refers to a battery that, after being discharged, can activate an active material by charging for continued use.

In general, the secondary battery comprises a positive electrode plate, a negative electrode plate, and an electrolyte. During charge-discharge of the battery, active ions are intercalated and deintercalated back and forth between the positive electrode plate and the negative electrode plate. It is understandable that the active ions are derived from a positive electrode active material of the positive electrode plate.

### Negative electrode plate

The negative electrode plate generally comprises a negative electrode current collector and a negative electrode film layer arranged on the negative electrode current collector, and the negative electrode film layer comprises a negative electrode active material.

An embodiment of the present application provides a negative electrode active material, comprising expanded graphite, a porous carbon layer, and silicon particles. The expanded graphite comprises a plurality of graphite layers. The porous carbon layer is at least distributed on an interlayer surface of one of the graphite layers, and the silicon particles are at least distributed in pore channels of porous carbon of the porous carbon layer.

Expanded Graphite (EG for short) is a loose and porous worm-like substance obtained by intercalation, water washing, drying, and high-temperature expansion of natural graphite flakes. Expanded graphite, like graphite, is a layered structure with a plurality of graphite layers. In each of the graphite layers, carbon atoms are sp² hybridized, each of the carbon atoms is covalently bonded to other 3 carbon atoms to form a hexagonal net structure; and the graphite layers are bonded by intermolecular forces there among.

In some of the embodiments, structure of the negative electrode active material can be confirmed by testing using a scanning transmission electron microscope.

It is understandable that the graphite layers of the expanded graphite comprise a graphite layer located in the middle and a graphite layer located in the outer layer based on positions thereof. Outward surface of the graphite layer located in the outer layer is considered to be exposed, and is not located in an interlayer, that is, the outer surface of the expanded graphite. Inward surface of the graphite layer located in the outer layer and two surfaces of the graphite layer located in the middle are all considered to be interlayer surfaces, that is, "interlayer surfaces of graphite layers."

It is understandable that the porous carbon layer is distributed not only on the interlayer surfaces of the graphite layers, but also on the outer surface of the expanded graphite.

Unexpected to be limited to any theory, for the above negative electrode active material of the present application, the porous carbon layer is pre-formed on the interlayer surfaces of the expanded graphite, and then the silicon particles are at least distributed in the pore channels of the porous carbon of the porous carbon layer, so that the pore channels of the porous carbon provide a storage space for uniform deposition of the silicon particles, and so that the silicon particles can be uniformly dispersed in the interlayers of the expanded graphite, which is not only conducive to high load of the silicon particles, but also lamellar structure of the expanded graphite is conducive to the internal structure enhancement and conductivity improvement of the negative electrode active material, and also provides a space for expansion of the silicon particles during cycles, thereby improving stability thereof during the cycles.

The conventional method for preparing a negative electrode active material by directly depositing silicon particles in expanded graphite, on the one hand, can very hardly achieve high load of the silicon particles, and on the other hand, disordered filling state of the silicon particles inside the expanded graphite and grain distribution of nonuniform-sized silicon particles will lead to nonuniform volume distribution of the negative electrode active material thus prepared during the cycles, and cause nonuniform distribution and excessive consumption of active lithium, thereby resulting in very poor cycle stability of the negative electrode active material.

The above negative electrode active material of the present application optimizes the distribution and filling mode of the silicon particles while retaining the advantages of enhanced mechanical strength and enhanced conductivity of the expanded graphite, thereby obtaining the negative electrode active material that can enable the battery to have both high specific capacity and high cycle stability.

Further, the above negative electrode active material of the present application is applied to the secondary battery, to further improve the rate performance of the secondary battery.

In some of the embodiments, the porous carbon layer covers a surface of at least one of the graphite layers.

Optionally, the porous carbon layer covers a surface of a part or each of the graphite layers of the expanded graphite.

In some of the embodiments, the expanded graphite is oxidized expanded graphite. It is understandable that the oxidized expanded graphite contains an oxygen-containing group. Optionally, the oxygen-containing group in the expanded graphite comprises at least one of a hydroxyl, an epoxy group, and a carboxyl. The oxygen-containing group, such as the hydroxyl, the epoxy group, and the carboxyl, are introduced between the graphite layers of the expanded graphite, providing a polar group for the adsorption of a carbon source during the preparation of the porous carbon layer, so that the carbon source can be more strongly attached to the graphite layers through these oxygen-containing groups, thus promoting the porous carbon to directionally and uniformly grow along the thickness direction on the surfaces of the graphite layers.

Further, mass content of the oxygen-containing group in the expanded graphite is 0.5%-38%; optionally 3%-37.5%; and more optionally 4%-37.5% or 17%-37.5%. As an example, the mass content of the oxygen-containing group in the expanded graphite may be 0.5%, 1%, 2%, 3%, 4%, 5%, 10%, 15%, 17%, 18%, 20%, 25%, 30%, 35%, 37.5%, or 38%.

In some of the embodiments, mass ratio of the porous carbon layer to the expanded graphite is (0.1-20):1. Controlling the mass ratio of the porous carbon layer to the expanded graphite within the above range can provide a sufficient attachment and storage space for subsequent deposition of the silicon particles, which is conductive to uniform dispersion and high content load of the silicon particles in the interlayers of the expanded graphite.

As an example, the mass ratio of the porous carbon layer to the expanded graphite may be 0.1:1, 0.2:1, 0.5:1, 1:1, 2:1, 3:1, 4:1, 5:1, 6:1, 7:1, 8:1, 9:1, 10:1, 11:1, 12:1, 13:1, 14:1, 15:1, 16:1, 17:1, 18:1, 19:1, or 20:1. Optionally, the mass ratio of the porous carbon layer to the expanded graphite may be a range consisting of any two of the above point values, such as (4-16):1.

It is understandable that the "silicon particles" herein include, but are not limited to, pure silicon particles, or may be silicon-containing particles such as silicon-oxygen particles and silicon-carbon particles. In some of the embodiments, mass ratio of the silicon particles to the porous carbon layer is (0.7-12):1. As an example, the mass ratio of the silicon particles to the porous carbon layer may be 0.7:1, 0.8:1, 0.9:1, 1:1, 1.2:1, 1.5:1, 2:1, 5:1, 6:1, 7:1, 10:1, or 12:1. The mass ratio of the silicon particles to the porous carbon layer is optionally (0.7-1.5):1, and more preferably (0.7-1.2):1. Further controlling the range of the mass ratio of the silicon particles to the porous carbon layer can enable the silicon particles to deposit as much as possible in the pore channels of the porous carbon layer, rather than excessively depositing on the surface of the porous carbon layer, thereby improving the stability of the negative electrode active material, and facilitating improving the cycle stability and the rate performance of the battery to which it is applied.

In some of the embodiments, thickness of the porous carbon layer is 0.05-20 µm. The thickness of the porous carbon layer is controlled within this range to obtain a porous carbon layer with a relatively stable structure. In some specific examples, the porous carbon layer can be formed by in-situ growth of the carbon source along the thickness direction on the surface of the graphite layer under hydrothermal conditions.

It is understandable that the thickness of the porous carbon layer can be regulated based on the mass ratio of the carbon source to the expanded graphite, and temperature and duration of a hydrothermal reaction. The adhesion firmness of the porous carbon layer on the surface of the graphite layer is associated with the mass content of the oxygen-containing group in the expanded graphite.

As an example, the thickness of the porous carbon layer may be 0.05 µm, 0.1 µm, 0.15 µm, 0.2 µm, 0.5 µm, 1 µm, 2 µm, 3 µm, 4 µm, 5 µm, 6 µm, 7 µm, 8 µm, 9 µm, 10 µm, 12 µm, 14 µm, 16 µm, 18 µm, or 20 µm. Optionally, the thickness of the porous carbon layer may be a range consisting of any two of the above point values, such as 0.2-10 µm.

In some of the embodiments, BET specific surface area of the porous carbon layer is 40-1,500 m²/g, and optionally 600-1,500 m²/g. The BET specific surface area refers to specific surface area obtained by testing using BET adsorption. As an example, the BET specific surface area of the porous carbon layer may be 40 m²/g, 100 m²/g, 160 m²/g, 170 m²/g, 200 m²/g, 300 m²/g, 400 m²/g, 500 m²/g, 600 m²/g, 700 m²/g, 750 m²/g, 800 m²/g, 850 m²/g, 900 m²/g, 950 m²/g, 1,000 m²/g, 1,100 m²/g, 1,200 m²/g, 1,300 m²/g, 1,400 m²/g, 1,500 m²/g, or a range consisting of any two of the above point values.

In some of the embodiments, average pore size of the porous carbon layer is 0.1-40 nm. The average pore size is determined by: amplifying the surface of the material based on, e.g., a microphotograph, calculating the number of pores per unit length (for example, when the pore size is in a range of about 0.1-2 nm, the unit length is 10 nm; or when the pore size is in a range of about 2-40 nm, the unit length is 100 nm) as the number of cells, and then calculating the average pore size as per the following equation: average pore size=unit length/number of cells.

In some of the embodiments, the porous carbon layer is doped with nitrogen atoms. This can improve the defect concentration in the porous carbon layer, thereby increasing the transmission rate of lithium ions of the negative electrode active material, and further improving the rate performance of the secondary battery to which it is applied.

Further, mass content of the nitrogen atoms relative to the porous carbon layer is 0.1%-20%. As an example, the mass content of the nitrogen atoms relative to the porous carbon layer may be 0.1%, 0.2%, 0.5%, 1%, 2%, 4%, 5%, 7%, 10%, 12%, 14%, 16%, 18%, or 20%. The mass content of the nitrogen atoms relative to the porous carbon layer may be obtained by testing using elemental analysis.

In some of the embodiments, mass ratio of the silicon particles to the expanded graphite is (0.08-20):1, and optionally (3-18):1. As an example, the mass ratio of the silicon particles to the expanded graphite is 0.08:1, 0.2:1, 0.5:1, 0.7:1, 1:1, 2:1, 5:1, 6:1, 7:1, 8:1, 10:1, 11:1, 12:1, 13:1, 14:1, 15:1, 16:1, 18:1, 20:1, 22:1, or a range consisting of any two of the above point values.

In some of the embodiments, macroscopic average particle size of the silicon particles is 0.05-30 nm.

The macroscopic average particle size of the silicon particles may be obtained by XRD testing on the above negative electrode active material and calculation using Scherrer formula based on characteristic peaks of the silicon particles therein.

In some of the embodiments, the silicon particles include, but are not limited to, silicon particles, or may include at least one of silicon-carbon particles, silicon-nitrogen particles, etc. In a specific example, the silicon particles are pure silicon particles.

In some of the embodiments, in the negative electrode active material, mass content of the silicon particles is 6%-65%; and optionally 6%-50%, 10%-50%, or 35%-50%. As an example, the mass content of the silicon particles may be 6%, 10%, 15%, 20%, 30%, 35%, 38%, 40%, 45%, 48%, 50%, 55%, 60%, 62%, or 65%. The mass content of the silicon particles in the above negative electrode active material may be obtained by ICP analysis.

In some of the embodiments, in the negative electrode active material, mass content of the expanded graphite is 2%-85%. As an example, the mass content of the expanded graphite may be 2%, 5%, 6%, 7%, 10%, 20%, 30%, 35%, 40%, 50%, 55%, 60%, 70%, or 80%. In the negative electrode active material, the mass content of the expanded graphite may be obtained by: fully impregnating the negative electrode active material with DMC (dimethyl carbonate) for 5 h, then pulverizing it by ion polishing, subjecting the powder obtained from the pulverization to XRD testing to obtain diffraction peaks of crystal peaks with the graphite structure, and calculating the mass content of the expanded graphite using XRD internal standard method.

In some of the embodiments, the negative electrode active material further comprises a coating layer. The coating layer covers on at least a part of the outer surface of the expanded graphite. The structure of the negative electrode active material with the coating layer may also be confirmed using a scanning transmission electron microscope.

Further, the coating layer comprises a carbon material. As an example, the coating layer may be a carbon material layer, such as an amorphous carbon layer.

Further, mass content of the coating layer in the negative electrode active material is 0.2%-3%. As an example, the mass content of the coating layer in the negative electrode active material may be 0.2%, 0.5%, 1%, 1.5%, 2%, 2.5%, or 3%.

Further, thickness of the coating layer is 0.5-200 nm.

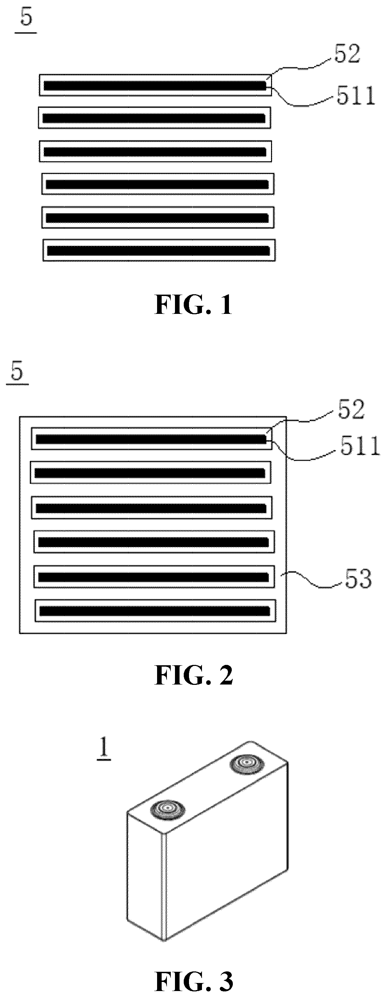

In the example as shown in FIG. 1, the negative electrode active material comprises expanded graphite, a porous carbon layer 52, and silicon particles (not shown in the figure). The expanded graphite comprises a plurality of graphite layers 511, the porous carbon layer 52 is at least distributed on an interlayer surface of one of the graphite layers 511, and the silicon particles are at least distributed in pore channels of porous carbon of the porous carbon layer 52. Specifically, the porous carbon layer 52 covers a surface of each of the graphite layers 511.

The example as shown in FIG. 2 is different from that shown in FIG. 1 is that it further comprises a coating layer 53, and the coating layer 53 covers an outer surface of the expanded graphite by continuous coating or partial surface coating.

On the other hand, the present application further provides a method for preparing the above negative electrode active material, comprising the following steps S20-S40.

S20: mixing the expanded graphite with a carbon source solution, subjecting the mixture to a hydrothermal reaction, and then calcining solid product of the hydrothermal reaction to obtain an intermediate product.

The intermediate product comprises the expanded graphite and the porous carbon layer distributed on the surface of the graphite layer in the expanded graphite.

In some of the embodiments, the expanded graphite is oxidized expanded graphite. Before the step S20, the above preparation method further comprises a step of preparing the oxidized expanded graphite, comprising the following step S10.

S10: impregnating the expanded graphite with an acid solution and washing until neutral, to obtain the oxidized expanded graphite.

Further, the acid solution comprises at least one of HNO₃ and H₂SO₄.

As an example, a mixture of concentrated nitric acid and concentrated sulfuric acid at a volume ratio of 1:1 is used as the acid solution.

It is understandable that the oxidation degree is controlled by controlling the impregnation duration and the concentration of the acid solution in the step S10.

In some of the embodiments, a carbon source in the carbon source solution comprises at least one of glucose, asphalt, sucrose, and phenolic resin.

In some of the embodiments, mass ratio of the carbon source in the carbon source solution to the expanded graphite is (1-200):1. It is understandable that the mass ratio of the porous carbon layer to the expanded graphite can be controlled by controlling the mass ratio of the carbon source to the expanded graphite.

In some of the embodiments, a nitrogen source is further added to the hydrothermal reaction. In this way, the porous carbon layer is doped with nitrogen atoms.

Further, the nitrogen source comprises at least one of pyrrole, melamine, and acetonitrile. Further, mass ratio of the nitrogen source to the expanded graphite is (0.02-20):100, and optionally (0.1-20):100. It is understandable that mass content of the nitrogen atoms in the porous carbon layer can be regulated by regulating the mass ratio of the nitrogen source to the expanded graphite.

In some of the embodiments, the hydrothermal reaction is carried out at a temperature of 80-280°C for a duration of 0.5-5 h. As an example, the hydrothermal reaction may be carried out at a temperature of 80°C, 100°C, 120°C, 150°C, 160°C, 180°C, 200°C, 240°C, 260°C, 280°C for a duration of 0.5 h, 1 h, 2 h, 3 h, 4 h, or 5 h. Further, the hydrothermal reaction is carried out at a temperature of 150-240°C for a duration of 1 h-3 h.

In some of the embodiments, the calcination is carried out under conditions, comprising: calcination at 400-1,000°C for 1-5 h. As an example, the calcination may be carried out at a temperature of 400°C, 500°C, 600°C, 700°C, 800°C, 900°C, or 1,000°C for a duration of 1 h, 2 h, 3 h, 4 h, or 5 h.

Further, the calcination may be carried out under an atmosphere of an inert gas, nitrogen, air, or a vacuum atmosphere.

S40: forming the silicon particles in the pore channels of the porous carbon of the intermediate product.

In some of the embodiments, a chemical vapor deposition process is used in the S40; specifically including introducing silane and a reducing gas into the intermediate product, and performing chemical vapor deposition under a protective atmosphere. In this way, silane is reduced to form the silicon particles under the action of the reducing gas.

Further, in the S40, the chemical vapor deposition is performed at a temperature of 400-1,000°C. Further, in the S40, the chemical vapor deposition is performed for a duration of 1-5 h.

As an example, in the S40, the chemical vapor deposition may be performed at a temperature of 400°C, 500°C, 600°C, 700°C, 800°C, 900°C, or 1,000°C for a duration of 1 h, 2 h, 3 h, 4 h, or 5 h.

Further, the silane comprises at least one of monosilane and disilane.

Further, the reducing gas comprises acetylene. Further, volume ratio of the reducing gas to silane is (0.02-1):1, and may be, as an example, 0.02: 1, 0.05: 1, 0.1: 1, 0.5:1, or 1: 1. The reducing gas mainly functions to reduce silane to form silicon particles. Since the reducing gas has a smaller content than silane, and substantially will not generate the carbon particles, carbon coating can be performed in subsequent step S50.

Further, a protective gas may be further introduced as a carrier gas in the S40, and the protective gas may comprise at least one of an inert gas and nitrogen.

In some of the embodiments, after the S40, a step of performing carbon coating the product obtained in the S40 may be further included, including step S50.

S50: introducing a gas raw material into the product obtained from the chemical vapor deposition in the S40 for chemical vapor deposition, the gas raw material comprising at least one of ethylene, acetylene, and propylene.

In this way, carbon is formed by thermal hydrolysis of the gas raw material under the conditions of chemical vapor deposition to form a carbon coating layer.

Further, in the S50, the chemical vapor deposition is performed at a temperature of 600-1,200°C. Further, in the S50, the chemical vapor deposition is performed for a duration of 1-5 h.

As an example, in the S50, the chemical vapor deposition may be performed at a temperature of 600°C, 700°C, 800°C, 900°C, 1,000°C, 1,100°C, or 1,200°C for a duration of 1 h, 2 h, 3 h, 4 h, or 5 h.

As an example, the negative electrode current collector has two surfaces opposite in its own thickness direction, and the negative electrode film layer is arranged on any one or both of the two opposite surfaces of the negative electrode current collector.

In some embodiments, the negative electrode current collector may be a metal foil or a composite current collector. For example, a copper foil may be used as the metal foil. The composite current collector can comprise a polymer material substrate layer and a metal layer formed on at least one surface of the polymer material substrate. The composite current collector may be formed by forming a metal material on the high molecular material substrate. The metal material includes, but is not limited to, at least one of copper, a copper alloy, nickel, a nickel alloy, titanium, a titanium alloy, silver, and a silver alloy; and the high molecular material substrate includes, but is not limited to, at least one of polypropylene (PP), polyethylene terephthalate (PET), polybutylene terephthalate (PBT), polystyrene (PS), or polyethylene (PE).

In some embodiments, the above negative electrode film layer contains not only the above negative electrode active material, but also a negative electrode active material for a battery well known in the art. As an example, the negative electrode active material may further include at least one of the following materials: artificial graphite, natural graphite, soft carbon, hard carbon, a silicon-based material, a tin-based material, lithium titanate, and the like. The silicon-based material may be selected from at least one of elemental silicon, a silicon-oxygen compound, a silicon-carbon composite, a silicon-nitrogen composite, and a silicon alloy. The tin-based material may be selected from at least one of elemental tin, a tin-oxygen compound, and a tin alloy.

In some embodiments, the negative electrode film layer further optionally comprises a binder. The binder may be selected from at least one of styrene butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode film layer further optionally comprises a conductive agent. The conductive agent may be selected from at least one of superconducting carbon, acetylene black, carbon black, Ketjen black, carbon dot, carbon nanotube, graphene, and carbon nanofiber.

In some embodiments, the negative electrode film layer further optionally comprises other adjuvants, for example, a thickener, and as an example, the thickener is, for example, sodium carboxymethyl cellulose (CMC-Na).

In some embodiments, the negative electrode plate may be prepared by: dispersing the above ingredients, such as the negative electrode active material, the conductive agent, the binder, and any other ingredient, for preparing the negative electrode plate in a solvent such as water to form a negative electrode slurry; and coating the negative electrode slurry on the negative electrode current collector, followed by processes, such as drying and cold pressing, to provide the negative electrode plate.

### Positive electrode plate

In a secondary battery, the positive electrode plate generally comprises a positive electrode current collector and a positive electrode film layer arranged on the positive electrode current collector, and the positive electrode film layer comprises a positive electrode active material.

A metal foil or a composite current collector may be used as the positive electrode current collector, wherein the composite current collector may be formed by arranging a metal material on a high molecular substrate. As an example, an aluminum foil may be used as the positive electrode current collector.

The specific type of the positive electrode active material may be an active material that can be used for the positive electrode of the secondary battery as is known in the art, and may be selected by those skilled in the art based on actual requirements.

As an example, the positive electrode active material may comprise a lithium-ion active material, which includes, but is not limited to, one or more of a lithium-transition metal oxide, a lithium-containing phosphate of olivine structure, and a respective modified compound thereof. Examples of the lithium-transition metal oxide may include, but are not limited to, one or more of a lithium-cobalt oxide, a lithium-nickel oxide, a lithium-manganese oxide, a lithium-nickel-cobalt oxide, a lithium-manganese-cobalt oxide, a lithium-nickel-manganese oxide, a lithium-nickel-cobalt-manganese oxide, a lithium-nickel-cobalt-aluminum oxide, and a modified compound thereof. Examples of the lithium-containing phosphate of olivine structure may include, but are not limited to, one or more of a lithium iron phosphate, a lithium iron phosphate-carbon composite material, a lithium manganese phosphate, a lithium manganese phosphate-carbon composite material, a lithium iron manganese phosphate, a lithium iron manganese phosphate-carbon composite material, and a modified compound thereof. These materials are all commercially available.

As an example, the positive electrode active material may include a sodium-ion active material, which may be a positive electrode active material for a sodium-ion battery well known in the art. As an example, the sodium-ion active material may include at least one of the following materials: a Prussian blue (PBA) type with a chemical formula of (NaxMA[MB(CN)₆]·zH₂O, wherein MA and MB are transition metal ions, which is a compound composed of sodium, transition metals, and cyanide, such as Na₄Fe₂(CN)₆, Na₄Fe(CN)₆, Na_{1.72}MnFe₂(CN)₆, NaMnMn(CN)₆, or NaNiFe(CN)₆; an oxide type with a chemical formula of NaxMO₂, 0<x≤1, wherein M is a transition metal element, which is composed of a transition metal oxide, and mainly relates to transition metals with variable valence of vanadium (V), chromium (Cr), manganese (Mn), iron (Fe), cobalt (Co), nickel (Ni), and copper (Cu), wherein manganese and iron that are relatively abundant in resources are most commonly used, such as NaCrO₂, NaMnO₂, NaMnO₂, Na_{0.61}Ti_{0.48}Mn_{0.52}O₂, Na[Fe_{0.5}Co_{0.5}]O₂, NaMnO₂, or Na[Ni_{0.25}Fe_{0.5}Mn_{0.25}]O₂; and a polyanionic compound type with a chemical formula of NaₓM_{y}[(XOₘ)ⁿ⁻]_{z}, wherein M is a metal ion with a variable valence state, X is an element such as P, S, and V, which is composed of sodium, transition metals, and anions, wherein the transition metals mainly include iron, vanadium, cobalt, etc., and the anions mainly include phosphate, pyrophosphate, fluorophosphate, and sulfate, such as NaMnFe₂(PO₄)₆, Na₂MnP₂O₇, Na₃V₂(PO₄)₃, Na₂Fe₂(SO₄)₃, NaFePO₄, Na₃V₂(PO₄)₂F₃, or Na₄Co₃(PO₄)₂(P₂O₇).

In some embodiments, the modified compounds of the above materials may be obtained by doping modification or surface coating modification of the materials.

It is understandable that the battery will be accompanied by deintercalation and consumption of active ions such as lithium (Li) during the charge-discharge, and the content of the active ions such as Li in the positive electrode plate is different when the battery is discharged to different states. Taking the lithium-ion active material as an example, in the enumeration of the positive electrode active material in the present application, unless otherwise stated, the content of Li is the initial state of the material. The positive electrode active material is applied to the positive electrode plate in the battery system, and after charge-discharge cycles, the content of Li in the positive electrode active material contained in the electrode plate generally will change. The content of Li may be measured using, but not limited to, the molar content. Regarding "the content of Li is the initial state of the material", the initial state of the material refers to the state before the material is added to the positive electrode slurry. It is understandable that a material obtained by appropriate modification on the basis of the enumerated positive electrode material is also within the scope of the positive electrode material. The aforementioned appropriate modification refers to an acceptable modification mode for the positive electrode active material, and a non-limiting example thereof is, e.g., coating modification.

In the enumeration of the positive electrode active material in the present application, the content of oxygen (O) is only a theoretical state value. The release of oxygen from the crystal lattice will change the molar content of oxygen, and the actual content of oxygen atoms will fluctuate. The content of oxygen atoms may be measured using, but not limited to, the molar content.

The positive electrode film layer generally further optionally comprises a binder, a conductive agent and other optional adjuvants.

As an example, the conductive agent may be one or more of superconducting carbon, acetylene black, carbon black, Ketjen black, carbon dot, carbon nanotube, Super P (SP), graphene, and carbon nanofiber.

As an example, the binder may be one or more of styrene butadiene rubber (SBR), water-based acrylic resin, polyvinylidene fluoride (PVDF), polytetrafluoroethylene (PTFE), ethylenevinyl acetate copolymer (EVA), polyacrylic acid (PAA), carboxymethyl cellulose (CMC), polyvinyl alcohol (PVA), and polyvinyl butyral (PVB).

In some embodiments, the positive electrode plate may be prepared by: dispersing the above ingredients, such as the positive electrode active material, the conductive agent, the binder, and any other ingredient, for preparing the positive electrode plate in a solvent to form a positive electrode slurry; and coating the positive electrode slurry on the positive electrode current collector, followed by processes, such as drying and cold pressing, to provide the positive electrode plate. The solvent includes, but is not limited to, N-methylpyrrolidone.

### Electrolyte

The electrolyte functions to conduct ions between the positive electrode plate and the negative electrode plate. For example, the electrolyte may be in a liquid state, a gel state, or an all-solid state.

In some embodiments, the electrolyte is an electrolyte solution. The electrolyte solution comprises an electrolyte salt and a solvent.

In some of the embodiments, the electrolyte salt comprises at least one of a sodium salt, a lithium salt, and a potassium salt.

As an example, the sodium salt in the electrolyte salt may be selected from one or more of sodium perchlorate (NaClO₄), sodium tetrafluoroborate (NaBF₄), sodium hexafluorophosphate (NaPF₆), sodium hexafluoroarsenate (NaAsF₆), sodium trifluoroacetate (CF₃COONa), sodium tetraphenylborate (NaB(C₆H₅)₄), sodium trifluoromethylsulfonate (NaSO₃CF₃), sodium bis(fluorosulfonyl)imide (Na[(FSO₂)₂N]), or sodium bis(trifluoromethylsulfonyl)imide (Na[(CF₃SO₂)₂N]).

As an example, the lithium salt in the electrolyte lithium salt may be selected from one or more of lithium hexafluorophosphate (LiPF₆), lithium tetrafluoroborate (LiBF₄), lithium perchlorate (LiClO₄), lithium hexafluoroarsenate (LiAsF₆), lithium bis(fluorosulfonyl)imide (LiFSI), lithium bis(trifluoromethanesulfonyl)imide (LiTFSI), lithium trifluoromethanesulfonate (LiTFS), lithium difluoro(oxalato)borate (LiDFOB), lithium bis(oxalate)borate (LiBOB), lithium difluorophosphate (LiPO₂F₂), lithium difluorobis(oxalato)phosphate (LiDFOP), and lithium tetrafluoro(oxalato)phosphate (LiTFOP).

In some of the embodiments, the solvent comprises at least one of an ether solvent, an ester solvent, and a sulfone solvent.

As an example, the ether solvent may comprise at least one of ethylene glycol dimethyl ether (DME), diethylene glycol dimethyl ether (DEGDME), triethylene glycol dimethyl ether (TRGDME), tetraethylene glycol dimethyl ether (TEGDME), and 1,3-dioxolane (DOL); and
as an example, the ester solvent may comprise at least one of ethylene carbonate (EC), propylene carbonate (PC), butylene carbonate (BC), vinylene carbonate (VC), fluoroethylene carbonate (FEC), ethyl methyl carbonate (EMC), dimethyl carbonate (DMC), diethyl carbonate (DEC), dipropyl carbonate (DPC), methyl propyl carbonate (MPC), ethyl propyl carbonate (EPC), γ-butyrolactone (BL), 1,3-propane sultone (1,3-PS), methyl propionate (MP), methyl butyrate (MB), ethyl acetate (EA), ethyl propionate (EP), propyl propionate (PP), and ethyl butyrate (EB).

As an example, the sulfone solvent comprises dimethyl sulfoxide (DMSO).

In some embodiments, the electrolyte solution further optionally comprises an additive. For example, the additive can include a negative electrode film-forming additive and a positive electrode film-forming additive and can further include additives that can improve some properties of the battery, for example, an additive that improves the overcharging performance of the battery and an additive that improves the high- or low-temperature performance of the battery.

### Separator

In some embodiments, the secondary battery further comprises a separator. The separator is arranged between the positive electrode plate and the negative electrode plate, to serve for separation.

In some embodiments, the material of the separator may be selected from at least one of glass fiber, non-woven fabric, polyethylene, polypropylene, and polyvinylidene fluoride.

The separator may be a single-layer film or a multi-layer composite film. When the separator is a multi-layer composite film, the materials in each layer may be identical or different.

Unless otherwise particularly stated, all of the above raw materials are commercially available.

The shape of the secondary battery in the embodiments of the present application may be a cylinder shape, a square shape, or any other shape. FIG. 3 shows a battery cell 1 with a square structure as an example.

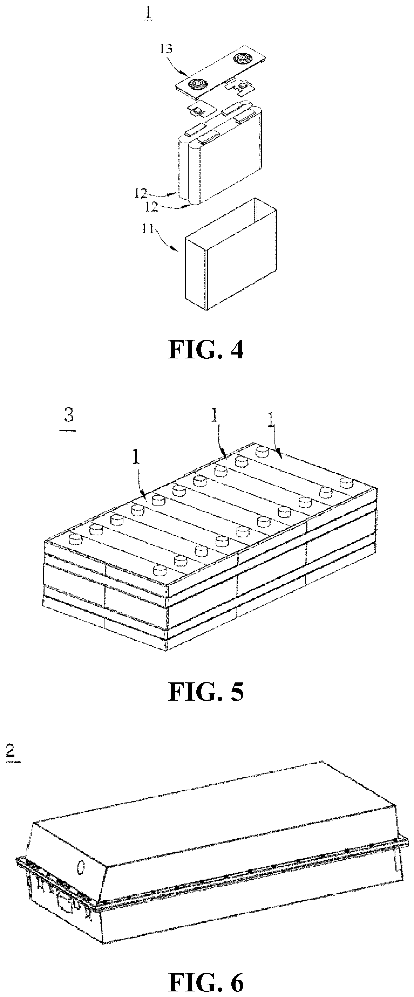

In some embodiments, referring to FIG. 4, the outer package may comprise a case 11 and a cover plate 13. The case 11 may comprise a bottom plate and a side plate connected to the bottom plate, wherein the bottom plate and the side plate enclose to form an accommodating cavity. The case 11 has an opening that communicates with the accommodating cavity, and the cover plate 13 can cover the opening to close the accommodating cavity. The positive electrode plate, the negative electrode plate, and the separator may form an electrode assembly 12 by a winding process or a stacking process. The electrode assembly 12 is encapsulated within the accommodating cavity. The above electrolyte solution impregnates the electrode assembly 12. The number of electrode assemblies 12 comprised in the battery cell 1 may be one or more, and may be selected by those skilled in the art based on specific actual requirements.

The secondary battery may be a battery cell, a battery module, or a battery pack.

FIG. 5 shows a battery module 3 as an example. Referring to FIG. 5, in the battery module 3, a plurality of battery cells 1 may be arranged sequentially along a length direction of the battery module 3, or, of course, may be arranged in any other manner. Further, the plurality of battery cells 1 may be fixed by fasteners.

Optionally, the battery module 3 may further comprise a shell having an accommodating space, in which the plurality of battery cells 1 are accommodated.

In some of the embodiments, the above battery modules may be further assembled into a battery pack, the number of battery modules comprised in the battery pack may be one or more, and a specific appropriate number may be selected by those skilled in the art based on the application and capacity of the battery pack.

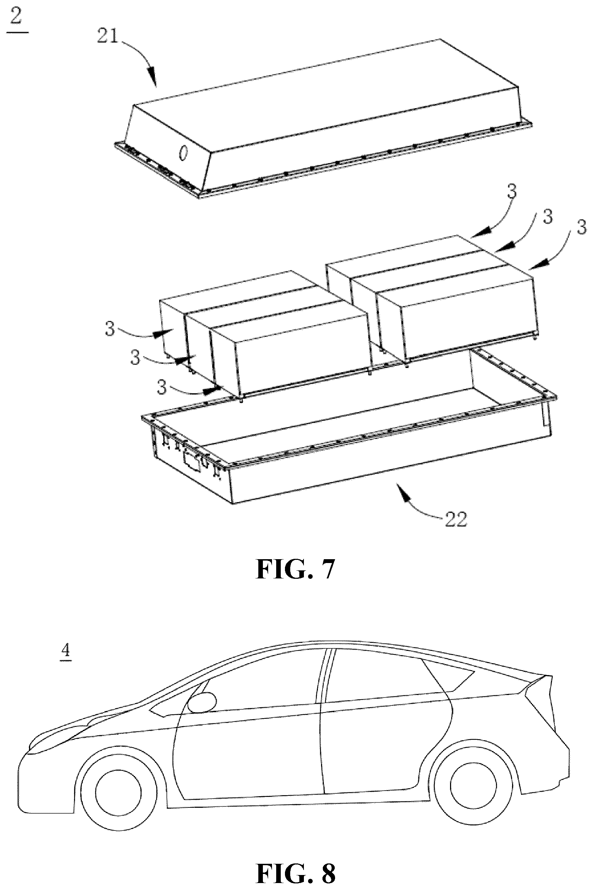

FIGS. 6 and 7 show a battery pack 2 as an example. Referring to FIGS. 6 and 7, the battery pack 2 may comprise a battery box and a plurality of battery modules 3 arranged in the battery box. The battery box comprises an upper box 21 and a lower box 22, wherein the upper box 21 can cover the lower box 22 and forms an enclosed space for accommodating the battery module 3. The plurality of battery modules 3 may be arranged in the battery box in any manner.

In addition, the present application further provides an electrical apparatus, comprising the secondary battery provided in the present application. The secondary battery may be used as a power source of the electrical apparatus, or may be used as an energy storage unit of the electrical apparatus. The electrical apparatus may include, but is not limited to, a mobile device, an electric vehicle, an electric train, a ship, a satellite, an energy storage system, etc. The mobile device may be, for example, a mobile phone or a laptop; and the electric vehicle may be, for example, but is not limited to, an all-electric vehicle, a hybrid electric vehicle, a plug-in hybrid electric vehicle, an electric bicycle, an electric scooter, an electric golf cart, an electric truck, etc.

For the electrical apparatus, the secondary battery may be selected based on use requirements thereof.

FIG. 8 shows an electrical apparatus 4 as an example. The electrical apparatus is, e.g., an all-electric vehicle, a hybrid electric vehicle, or a plug-in hybrid electric vehicle.

As another example, the apparatus may be, e.g., a mobile phone, a tablet, or a laptop.

In order to make objectives, technical solutions, and advantages of the present application more concise and clearer, the present application is described with reference to the specific embodiments below, but the present application is by no means limited to these embodiments. Embodiments described below are only the preferred embodiments of the present application and may be used to describe the present application and are not to be construed as limiting the scope of the present application. It should be noted that any modifications, equivalent substitutions, improvements, etc., made within the spirit and principles of the present application shall be included in the scope of protection of the present application.

In order to better illustrate the present application, the contents of the present application are further described below in connection with the embodiments. The specific embodiments are provided below.

### (I) Preparation of a negative electrode active material

### Example 1

(1) Expanded graphite was added to a mixed acid solution of concentrated nitric acid and concentrated sulfuric acid at a volume ratio of 1:1 for impregnation for 4 h, then washing until neutral to obtain oxidized expanded graphite.
(2) The oxidized expanded graphite was mixed with a carbon source glucose and a nitrogen source pyrrole to form a dispersion, which was subjected to a hydrothermal reaction at a hydrothermal temperature of 200°C for a duration of 2 h.
(3) The hydrothermal product was centrifuged, and the precipitate was calcined and decomposed at 500°C under an inert gas atmosphere for 4 h, to form porous carbon on an interlayer surface of a graphite layer of the expanded graphite.
(4) High-purity silane SiH₄ was mixed with acetylene and nitrogen at a volume ratio of 1:0.1:1, and the mixture was sent together into a reaction system for chemical vapor deposition at a controlled deposition temperature of 800°C for a duration as shown in Table 1, so that the silane penetrated into pore channels of porous carbon of the expanded graphite to complete diffusion and reduction, thus obtaining silicon particles.
(5) Acetylene was introduced into the reaction system for chemical vapor deposition in the step (4) at the controlled deposition temperature of 800°C for a duration of 1 h. The product obtained in the step (4) was carbon-coated to obtain the negative electrode active material, that is, a carbon-coated carbon-silicon composite expanded graphite material; wherein mass content of the carbon coating in the negative electrode active material was 1%.

Mass content of an oxygen-containing group in the oxidized expanded graphite, mass ratio of the carbon source to the oxidized expanded graphite, mass ratio of the nitrogen source to the oxidized expanded graphite, the deposition duration in the step (4), and parameters of the resulting negative electrode active material in Example 1 are detailed in Table 1.

It is understandable that the mass content of the oxygen-containing group in the oxidized expanded graphite, the mass ratio of the porous carbon layer to the oxidized expanded graphite, and the mass ratio of the silicon particles to the oxidized expanded graphite can be calculated based on mass changes before and after the deposition.

### Other Examples

The other examples are substantially same as Example 1, only except that the preparation parameters and/or the parameters of the negative electrode active material in Table 1 are different.

It is understandable that the mass content of the oxygen-containing group in the oxidized expanded graphite can be regulated based on the impregnation duration in the step (1); the mass ratio A of the porous carbon to the oxidized expanded graphite and the thickness of the porous carbon layer can be regulated based on the mass ratio C of the carbon source to the oxidized expanded graphite; the mass ratio B of the silicon particles to the oxidized expanded graphite can be regulated based on the deposition duration for which the silicon particles were formed in the step (4); the doping content of nitrogen (relative to the porous carbon) can be regulated based on the parameter of the ratio of the addition amount of the nitrogen source to the addition amount of the carbon source (which can be obtained based on the mass ratio C of the carbon source to the oxidized expanded graphite and the mass ratio D of the nitrogen source to the oxidized expanded graphite).

### Comparative Example 1

This comparative example is substantially same as Example 1, except that: the steps (1) to (3) in the example were omitted; i.e., the steps (4) and (5) were performed directly using the expanded graphite as the raw material.

### (II) Preparation of a battery

### (1) Preparation of a positive electrode plate

A positive electrode active material nickel-cobalt-manganese ternary material (NCM₈₁₁), a conductive agent acetylene black, and a binder polyvinylidene fluoride (PVDF) at a mass ratio of 97:2:1 were fully mixed and added to a solvent NMP to prepare a positive electrode slurry; which was uniformly coated on a positive electrode collector aluminum foil, dried at 85°C, then cold pressed, then die-cut, and stripped, to prepare a positive electrode plate of a lithium-ion battery.

### (2) Preparation of a negative electrode plate

Artificial graphite, the negative electrode active material prepared in the above examples or comparative example, the conductive agent acetylene black, the thickener sodium hydroxymethyl cellulose (CMC), and the binder styrene butadiene rubber (SBR) 12 at a mass ratio of 48:48:2:1:1 were added to a solvent water, and the mixture was fully mixed to prepare a negative electrode slurry; which was uniformly coated on a negative electrode collector copper foil, dried at 85°C, and then cold pressed to prepare a negative electrode plate of the lithium-ion battery.

### (3) Preparation of a separator

A polyethylene microporous film with a thickness of 12 µm was used as the porous separator substrate. Inorganic aluminum oxide powder, polyvinylpyrrolidone, and a solvent acetone at a weight ratio of 3:1.5:5.5 were fully mixed to prepare an inorganic slurry, which was coated on both sides of the substrate and dried to form an inorganic layer with a thickness of 5 µm, thus obtaining the separator.

### (4) Preparation of an electrolyte solution

Lithium hexafluorophosphate was dissolved in a mixed solvent of ethylene carbonate, dimethyl carbonate, and ethyl methyl carbonate (volume ratio of ethylene carbonate, dimethyl carbonate, and ethyl methyl carbonate was 1: 2: 1) to provide an electrolyte solution for the lithium-ion battery. The concentration of lithium hexafluorophosphate was 1 mol/L.

### (5) Preparation of the lithium-ion battery

The positive electrode plate, negative electrode plate, and the separator were winded to obtain a bare battery, followed by processes such as encapsulation, liquid injection (electrolyte solution), formation, and degassing, to provide the lithium-ion battery. N/P of the battery is 1, and designed rated capacity of the battery is 100 Ah.

### (III) Electrochemical test

### (1) Test for cycling performance

The lithium-ion batteries prepared in the above examples and comparative example were used as the objects. At 25°C, each of the batteries was charged to 4.3 V at a constant current of 1C, then charged at a constant voltage of 4.3 V until the current was reduced to 0.05C, then discharged to 2.5 V at a constant current of 1C to obtain the first cycle specific discharge capacity (Cd1); and repeatedly charged and discharged to the n-th cycle in this way, to obtain the specific discharge capacity after n cycles, denoted as Cdn.

Capacity retention rate=specific discharge capacity after n cycles (Cdn)/first cycle specific discharge capacity (Cd1). The number of cycles corresponding to the capacity retention rate in Table 1 is 500.

### (2) Test of the negative electrode plate for gram capacity

The negative electrode plates prepared in the above examples and comparative example were used as the objects. At 25°C, each of the negative electrode plates was made into a button-type battery, which was charged to 0.05V at a constant current at a rate of 0.1C, then charged to a current of 0.05C at a constant voltage, left to stand for 5 min, and then discharged to 2V at a constant current at a rate of 0.1C, to record the discharge capacity in this case. The discharge capacity was divided by the total mass of the negative electrode active material in the negative electrode plate to obtain the 0.1C gram capacity, mAh/g.

### (3) Test for rate performance

### Capacity test of the secondary battery

The lithium-ion batteries prepared in the above examples and comparative example were used as the objects. At 25°C, each of the secondary batteries was charged to 4.3 V at a constant current at a rate of 1C, then charged to a current of 0.05C at a constant voltage, left to stand for 5 min, and then discharged to 2.5V at a constant current at a rate of 1C, to record the discharge capacity in this case, i.e., the 1C discharge capacity.

The lithium-ion batteries prepared in the above examples and comparative example were used as the objects. At 25°C, the secondary battery was charged to 4.3 V at a constant current at a rate of 0.33C, then charged to a current of 0.05C at a constant voltage, left to stand for 5 min, and then discharged to 2.5V at a constant current at a rate of 0.33C, to record the discharge capacity in this case, i.e., the 0.33C discharge capacity.

The rate performance of the battery is expressed as 1C/0.33C (%), wherein 1C/0.33C (%)=1C discharge capacity/0.33C discharge capacity× 100%. The larger the value, the better its rate performance is.

Some parameters and battery performance results in the above examples and comparative example are as shown in Table 1.

**Table 1**

| Item | Parameters of negative electrode active material | | | | | | | | | Preparation parameters | | | | Battery performance | | |
|---|---|---|---|---|---|---|---|---|---|---|---|---|---|---|---|---|
| | Porous carbon layer | | | | | Silicon particles | | | Mass content of expanded graphite | Mass content of oxygen-containin g group | Mass ratio C | Mass ratio D | (4) Deposition duration h | Capacity retention rate | 0.1C gram capacity mAh/g | Rate performance |
| | Mass ratio A | Thickness µm | Average pore size nm | BET m²/g | Doping content of nitrogen | Mass ratio B | Macroscopic average particle size nm | Mass content | | | | | | | | |
| Example 1 | 7 | 10 | 14.6 | 1161 | 2% | 6.30 | 7.30 | 43.6% | 69% | 17.36% | 70 | 1.4 | 2.8 | 85% | 1881 | 77.1% |
| Example 2 | 0.1 | 0.2 | 40.1 | 169 | 2% | 0.08 | 20.03 | 6.7% | 83.9% | 3.85% | 1 | 0.02 | 1.4 | 89% | 315 | 82.3% |
| Example 3 | 20 | 16 | 2.6 | 708 | 2% | 19.85 | 1.28 | 47.9 % | 2.4% | 37.50% | 160 | 3.2 | 5.0 | 82% | 2071 | 73.3% |
| Example 4 | 0.17 | 0.05 | 0.1 | 40 | 2% | 1.95 | 0.06 | 64.7 % | 293% | 0.51% | 1.7 | 0.034 | 1.9 | 54% | 2656 | 36.9% |
| Example 5 | 16 | 20 | 9.8 | 1092 | 2% | 11.30 | 4.89 | 39.5% | 3.5% | 32.43% | 160 | 3.2 | 3.7 | 93% | 1707 | 88.3% |
| Example 6 | 7 | 10 | 14.6 | 860 | 0.10% | 5.43 | 7.30 | 40.0% | 74% | 17.36% | 70 | 0.07 | 2.7 | 81% | 1699 | 71.4% |
| Example 7 | 7 | 10 | 14.6 | 1363 | 10% | 5.43 | 7.30 | 40.0% | 74% | 17.36% | 70 | 7 | 2.7 | 90% | 1848 | 84.9% |
| Example 8 | 7 | 10 | 14.6 | 1461 | 20% | 5.43 | 7.30 | 40.0% | 74% | 17.36% | 70 | 14 | 2.7 | 91% | 1998 | 86.4% |
| Example 9 | 7 | 10 | 14.6 | 683 | 0 | 5.43 | 7.30 | 40.0% | 74% | 17.36% | 70 | 0 | 2.7 | 79% | 1698 | 68.6% |
| Example 10 | 0.1 | 0.05 | 0.6 | 42 | 2% | 0.69 | 0.31 | 38.8% | 54.7% | 0.99% | 1 | 0.02 | 1.6 | 56% | 1655 | 39.2% |
| Example 11 | 20 | 20 | 5.0 | 884 | 2% | 15.88 | 2.50 | 42.7% | 2.7% | 37.50% | 200 | 4 | 4.4 | 89% | 1839 | 82.6% |
| Example 12 | 7 | 10 | 14.6 | 1161 | 2% | 6.30 | 7.30 | 43.6% | 6.9% | 0 | 70 | 1.4 | 2.8 | 25% | 1637 | 10.9% |
| Comparative Example 1 | This comparative example is substantially same as Example 1, except that: the steps (1) to (3) in the example were omitted; i.e., the steps (4) to (5) were performed directly using the expanded graphite as the raw material. | | | | | | | | | | | | | 18% | 1544 | 6.4% |

In Table 1:
The mass content of the oxygen-containing group, that is, the mass content of the oxygen-containing group in the oxidized expanded graphite, can be calculated based on mass changes before and after the step (1).

The mass ratio A, that is, the mass ratio of the porous carbon to the oxidized expanded graphite, can be calculated by subtracting the mass of the oxidized expanded graphite used in the step (2) from the mass of the product obtained in the step (3) to obtain the mass of the porous carbon, and then calculating the ratio of the mass of the porous carbon to the mass of the oxidized expanded graphite. When the nitrogen source is added in the step (2), the mass of the resulting porous carbon includes the mass of the doped nitrogen atoms; and in this case, the mass ratio of the porous carbon to the oxidized expanded graphite refers to the mass ratio of the nitrogen-doped porous carbon to the oxidized expanded graphite.

The doping content of nitrogen relative to the porous carbon was obtained by subtracting the mass of the oxidized expanded graphite used in the step (2) from the mass of the product obtained in the step (3) to obtain the mass of the porous carbon, then obtaining the mass of the nitrogen atoms by testing through, e.g., elemental analysis, and calculating the ratio of the mass of the nitrogen atoms to the mass of the porous carbon, i.e., the doping content of nitrogen relative to the porous carbon.

The thickness of the porous carbon layer was obtained by CP slice analysis test on the negative electrode active material.

The BET specific surface area of the porous carbon layer can be measured using the BET specific surface area test method.

The average pore size of the porous carbon layer was determined by: amplifying the surface of the material based on, e.g., a microphotograph, calculating the number of pores per unit length (for example, when the pore size was in a range of about 0.1-2 nm, the unit length was 10 nm; or when the pore size was in a range of about 2-40 nm, the unit length was 100 nm) as the number of cells, and then calculating the average pore size as per the following equation: average pore size=unit length/number of cells.

The mass ratio B, i.e., the mass ratio of the silicon particles to the oxidized expanded graphite, can be obtained by obtaining the mass of the silicon particles based on the mass difference between the product obtained in the step (4) and the oxidized expanded graphite deposited with the porous carbon and used in the step (4), and then calculating the ratio of the mass of the silicon particles to the mass of the corresponding employed oxidized expanded graphite.

In the Comparative Example 1, the steps (1) to (3) of forming the porous carbon on the interlayer surface of the graphite layer of the expanded graphite were omitted, and the step (4) of depositing the silicon particles and the step (5) of carbon coating were performed directly using the expanded graphite in the step (1) as the raw material, wherein the silicon particles were not firmly deposited on the expanded graphite, it was very difficult to achieve high load of the silicon particles, and disordered filling state of the silicon particles inside the expanded graphite and grain distribution of nonuniform-sized silicon particles would lead to nonuniform volume distribution of the negative electrode active material thus prepared during cycles, and cause nonuniform distribution and excessive consumption of active lithium, thereby resulting in very poor cycle stability and rate performance of the negative electrode active material, and additionally resulting in low gram capacity of the negative electrode active material.

In the examples, the porous carbon layer was pre-formed on the interlayer surface of the expanded graphite, and then the silicon particles were deposited in the pore channels of the porous carbon of the porous carbon layer, so that the pore channels of the porous carbon provide a storage space for uniform deposition of the silicon particles, and so that the silicon particles can be uniformly dispersed in interlayers of the expanded graphite, which is not only conducive to high load of the silicon particles, but also lamellar structure of the expanded graphite is conducive to the internal structure enhancement and conductivity improvement of the negative electrode active material, and also provides a space for expansion of the silicon particles during the cycles, thereby improving stability thereof during the cycles.

As can be seen from the comparison of the Examples 1 to 5, the total amount of the negative electrode active material in Example 2 is small, so that its gram capacity is relatively low. As can be seen from the comparison of the mass of the porous carbon and the silicon particles in Example 4, the mass of the silicon particles is much greater than the mass of the porous carbon, so that the silicon particles are not only deposited in the pore channels of the porous carbon, but also some of the silicon particles are deposited on the surface of the porous carbon, thereby reducing the cycle retention rate and rate performance thereof to a certain extent.

As can be seen from the comparison of Examples 6 to 9, the difference lies in: the addition amount of the nitrogen source in the preparation process is different. When the addition amount of the expanded graphite remains constant, the mass ratio of the nitrogen source to the expanded graphite specifically as shown in Table 1 is different, so that the doping content of nitrogen relative to the porous carbon in the negative electrode active material thus prepared is different; wherein the addition amount of the nitrogen source in Example 9 is 0, and the battery therein has relatively low cycle retention rate and rate performance.

In Examples 10-11, the mass of the silicon particles is much greater than the mass of the porous carbon in Example 10, so that the silicon particles are not only deposited in the pore channels of the porous carbon, but also some of the silicon particles are deposited on the surface of the porous carbon, thereby reducing the cycle retention rate and rate performance thereof to a certain extent.

Compared with Example 1, Example 12 is different in that the expanded graphite was not subjected to the oxidation in the step (1), but was directly subjected to the steps (2) to (5). Therefore, the porous carbon was not firmly deposited on the expanded graphite. With the repeated charge-discharge of the battery, the stability of the negative electrode active material decreases, thereby decreasing the cycling performance of the battery.

The technical features of the above embodiments can be combined in any way. To simplify the description, not all possible combinations of the technical features of the above embodiments are described. However, as long as a combination of these technical features is not contradictory, the combination should be considered to be encompassed within the scope disclosed in the present specification.

The foregoing embodiments only describe several implementations of the present application, which are described relatively specifically and in detail, and thus, cannot be construed as a limitation to the scope of patent of the present invention. It should be noted that those of ordinary skill in the art may further make some variations and improvements without departing from the concept of the present application, all of which fall within the scope of protection of the present application. Therefore, the scope of protection of the present patent application should be determined by the appended claims, and the specification and drawings can be used to explain the contents of the claims.

## Claims

1. A negative electrode active material, comprising expanded graphite, a porous carbon layer, and silicon particles, wherein the expanded graphite comprises a plurality of graphite layers, the porous carbon layer is at least distributed on an interlayer surface of one of the graphite layers, and the silicon particles are at least distributed in pore channels of porous carbon of the porous carbon layer.

2. The negative electrode active material according to claim 1, wherein the porous carbon layer covers a surface of at least one of the graphite layers.

3. The negative electrode active material according to claim 2, wherein the porous carbon layer covers a surface of each of the graphite layers.

4. The negative electrode active material according to any one of claims 1 to 3, wherein the expanded graphite is oxidized expanded graphite.

5. The negative electrode active material according to claim 4, wherein an oxygen-containing group in the expanded graphite comprises at least one of a hydroxyl, an epoxy group, and a carboxyl.

6. The negative electrode active material according to any one of claims 1 to 5, wherein at least one of conditions below is satisfied:
(1a) mass ratio of the porous carbon layer to the expanded graphite is (0.1-20):1;
(1b) thickness of the porous carbon layer is 0.05 µm-20 µm;
(1c) BET specific surface area of the porous carbon layer is 40-1,500 m²/g;
(1d) average pore size of the porous carbon layer is 0.1 nm-40 nm; and
(1e) the porous carbon layer is doped with nitrogen atoms.

7. The negative electrode active material according to claim 6, wherein at least one of conditions below is satisfied:
(1) the mass ratio of the porous carbon layer to the expanded graphite is (4-16): 1;
(2) the thickness of the porous carbon layer is 0.2 µm-10 µm;
(3) the BET specific surface area of the porous carbon layer is 600-1,500 m²/g; and
(4) mass content of the nitrogen atoms relative to the porous carbon layer is 0.1%-20%.

8. The negative electrode active material according to any one of claims 1 to 7, wherein at least one of conditions below is satisfied:
(2a) mass ratio of the silicon particles to the expanded graphite is (0.08-20):1;
(2b) macroscopic average particle size of the silicon particles is 0.05 nm-30 nm;
(2c) mass ratio of the silicon particles to the porous carbon layer is (0.7-12): 1; and
(2d) in the negative electrode active material, mass content of the silicon particles is 6%-65%.

9. The negative electrode active material according to claim 8, wherein at least one of conditions below is satisfied:
(1) the mass ratio of the silicon particles to the expanded graphite is (3-18):1; and
(2) the mass ratio of the silicon particles to the porous carbon layer is (0.7-1.5):1.

10. The negative electrode active material according to any one of claims 1 to 9, wherein the negative electrode active material further comprises a coating layer covering on at least a part of an outer surface of the expanded graphite.

11. The negative electrode active material according to claim 10, wherein at least one of conditions below is satisfied:
(1) the coating layer comprises a carbon material;
(2) mass content of the coating layer in the negative electrode active material is 0.2%-3%; and
(3) thickness of the coating layer is 0.5 nm-200 nm.

12. A method for preparing the negative electrode active material according to any one of claims 1 to 11, comprising steps of:
mixing the expanded graphite with a carbon source solution, subjecting the mixture to a hydrothermal reaction, and then calcining solid product of the hydrothermal reaction to obtain an intermediate product; wherein the intermediate product comprises the expanded graphite and the porous carbon layer distributed on the surface of the graphite layer in the expanded graphite; and
forming the silicon particles in the pore channels of the porous carbon of the intermediate product.

13. The method for preparing a negative electrode active material according to claim 12, wherein at least one of conditions below is satisfied:
(3a) a carbon source in the carbon source solution comprises at least one of glucose, asphalt, sucrose, and phenolic resin;
(3b) mass ratio of the carbon source in the carbon source solution to the expanded graphite is (1-200):1;
(3c) a nitrogen source is further added to the hydrothermal reaction;
(3d) the hydrothermal reaction is carried out at a temperature of 80-280°C for a duration of 0.5-5 h;
(3e) the calcination is carried out under conditions, comprising: calcination at 400-1,000°C for 1-5 h; and
(3f) the expanded graphite is oxidized expanded graphite.

14. The method for preparing a negative electrode active material according to claim 13, wherein at least one of conditions below is satisfied:
(1) the nitrogen source comprises at least one of pyrrole, melamine, and acetonitrile;
(2) the oxygen-containing group in the expanded graphite comprises at least one of the hydroxyl, the epoxy group, and the carboxyl; and
(3) mass content of the oxygen-containing group in the expanded graphite is 0.5%-38%.

15. The method for preparing a negative electrode active material according to any one of claims 12 to 14, wherein the step of forming the silicon particles in the pore channels of the porous carbon of the intermediate product comprises a substep below:
introducing silane and a reducing gas into the intermediate product, and performing chemical vapor deposition under a protective atmosphere.

16. The method for preparing a negative electrode active material according to claim 15, wherein at least one of conditions below is satisfied:
(1) the silane comprises at least one of monosilane and disilane;
(2) the chemical vapor deposition is performed at a temperature of 400-1,000°C; and
(3) the chemical vapor deposition is performed for a duration of 1-5 h.

17. The method for preparing a negative electrode active material according to any one of claims 15 to 16, wherein a gas raw material is introduced into a product obtained from the chemical vapor deposition for chemical vapor deposition to form a carbon coating layer, the gas raw material comprising at least one of ethylene, acetylene, and propylene.

18. The method for preparing a negative electrode active material according to claim 17, wherein the step of forming the carbon coating layer satisfies at least one of conditions below:
(1) the chemical vapor deposition is performed at a temperature of 600-1200°C; and
(2) the chemical vapor deposition is performed for a duration of 1-5 h.

19. The method for preparing a negative electrode active material according to any one of claims 12 to 18, wherein the expanded graphite is oxidized expanded graphite; and the preparation method further comprises a step of preparing the oxidized expanded graphite, comprising a substep below:
impregnating the expanded graphite with an acid solution and washing until neutral, to obtain the oxidized expanded graphite.

20. The method for preparing a negative electrode active material according to claim 19, wherein the acid solution comprises at least one of HNO₃ and H₂SO₄.

21. A negative electrode plate, comprising the negative electrode active material according to any one of claims 1 to 11.

22. A secondary battery, comprising the negative electrode plate according to claim 21.

23. An electrical apparatus, comprising the secondary battery according to claim 22.
